# EUROPÄISCHE PATENTSCHRIFT

(11) **EP 2 918 480 B1**
(45) Veröffentlichungstag und Bekanntmachung des Hinweises auf die Patenterteilung: **11.10.2017**
(21) Anmeldenummer: 15000747.4
(22) Anmeldetag: 13.03.2015
(51) Int. Cl.: B62D 13/04, B62D 13/00, B62D 53/06

(54) **LENKABNAHME UND SCHWERLAST-TRANSPORTFAHRZEUG**
DEVICE FOR DETECTING A TURNING ANGLE AND HEAVY DUTY TRANSPORT VEHICLE
DISPOSITIF POUR LA DÉTECTION D'UN ANGLE DE BRAQUAGE ET VÉHICULE DE TRANSPORT DE CHARGES LOURDES

(30) Priorität: 14.03.2014 DE 102014003488; 14.03.2014 DE 202014002231 U
(43) Veröffentlichungstag der Anmeldung: 16.09.2015
(73) Patentinhaber: Scheuerle Fahrzeugfabrik GmbH, 74629 Pfedelbach (DE)
(72) Erfinder: Sommer, Dieter, 74629 Pfedelbach (DE)
(74) Vertreter: Leitner, Waldemar

(56) Entgegenhaltungen:
- FR-A- 1 455 915

## Beschreibung

Die Erfindung betrifft eine Lenkabnahme zur Erfassung eines Einschlagwinkels zwischen einem voreilenden ersten Fahrzeugteil und einem nacheilenden zweiten Fahrzeugteil eines Fahrzeugs, gemäß dem Oberbegriff des Anspruchs 1. Die Erfindung betrifft weiter ein Schwerlast-Transportfahrzeug gemäß dem Oberbegriff des Anspruchs 12 mit einer solchen Lenkabnahme.

Eine derartige Lenkabnahme für ein Schwerlast-Transportfahrzeug ist aus der DE 840 650 B bekannt. In dieser Druckschrift ist eine Deichsellenkung für Schwerlastfahrzeuge mit beschränktem Radeinschlag beschrieben. Die Deichsel ist mit einer Kurvenscheibe verbunden, die durch die Einschlagbewegung der Deichsel um eine Achse gedreht wird. Diese Kurvenscheibe hat im Bereich des zulässigen Lenkeinschlags einen etwa parabolischen oder hyperbolischen Verlauf. Eine Schwenkung der Kurvenscheibe wird daher über jeweils eine Rolle an einen Geberzylinder, der jeweils ein Zylinderrohr und eine Kolbenstange umfasst, übertragen. Die Geberzylinder sind mit Steuerzylinder verbunden, so dass durch die Bewegung der Kolben der für jedes Rad vorgesehene Steuerkolben verstellt und damit über das eigentliche Steuergestänge das Rad eingeschlagen wird.

Eine Lenkabnahme und ein Schwerlast-Transportfahrzeug sind ebenfalls aus der DE 10 2006 018 388 B4 bekannt. Bei diesem Schwerlast-Transportfahrzeug besteht das voreilende erste Fahrzeugteil aus einer Zugmaschine, während das nacheilende zweite Fahrzeugteil aus einem Sattelauflieger besteht. Die Lenkabnahme oder Lenkungsabnahme umfasst zwei Geberzylinder, mit denen die Lenkbewegungen bzw. der Einschlagwinkel der Zugmaschine in Bezug zum Sattelauflieger abgenommen werden. Die Geberzylinder sind dort zwischen einem Drehteller der Zugmaschine und dem Sattelauflieger angeordnet, wobei ihre Zylinderrohre in einem erhöhten Bereich des Sattelaufliegers schwenkbar montiert und ihre Kolbenstangen am Drehteller angelenkt sind.

Eine ähnliche Lenkabnahme bzw. ein Schwerlast-Transportfahrzeug mit einer solchen Lenkabnahme ist aus der DE 20 2012 010 545 U1 des Anmelders bekannt. Bei diesem Schwerlast-Transportfahrzeug besteht das nacheilende zweite Fahrzeugteil aus einem mehrachsigen Nachläufer mit einer Lenkachse und mehreren Starrachsen, während das voreilende erste Fahrzeugteil aus einem auf dem Nachläufer und über einen Schwanenhals auf einer Zugmaschine des Transportfahrzeugs abgestützten Teleskopträger besteht. Am hinteren Ende des Teleskopträgers ist ein Drehkranz vorgesehen, der starr mit dem Teleskopträger verbunden und um eine Fahrzeughochachse drehbar auf dem Nachläufer abgestützt ist. Die Lenkeinrichtung des Schwerlast-Transportfahrzeugs ist als Drehschemellenkung ausgebildet und umfasst einen als Geberzylinder der Lenkabnahme dienenden Hydraulikzylinder, der bei einer Kurvenfahrt eine von der Zugmaschine und dem Träger verursachte Drehung des Drehkranzes in Bezug zum Nachläufer abnimmt, sowie zwei Nehmerzylinder einer Achsschenkellenkung der Lenkachse des Nachläufers, die hydraulisch mit dem Geberzylinder verbunden sind und für eine Zwangslenkung der Lenkachse des Nachläufers in Abhängigkeit vom Drehwinkel des Drehkranzes und damit von Veränderungen eines Einschlagwinkels des Teleskopträgers in Bezug zum Nachläufer sorgen.
Bei dieser Art Lenkabnahme, bei der das Zylinderrohr des Geberzylinders am voreilenden Fahrzeugteil und die Kolbenstange an einem in Bezug zum voreilenden Fahrzeugteil drehbaren Drehkranz des nacheilenden Fahrzeugteils angelenkt ist, oder umgekehrt, kann die Beziehung zwischen dem Einschlagwinkel des voreilenden Fahrzeugteils und dem Einschlagwinkel des nacheilenden Fahrzeugteils, der durch die Einwirkung der Nehmerzylinder auf die Lenkachse hervorgerufen wird, nicht verändert werden, ohne dass zusätzliches Hydrauliköl in einen Hydraulikkreis zwischen dem Geberzylinder und dem Nehmerzylinder eingespeist oder aus dem Hydraulikkreis abgeführt wird, was relativ aufwändig ist. Darüber hinaus muss bei dieser Art Lenkabnahme der maximale Drehwinkel zwischen dem voreilenden und dem nacheilenden Fahrzeugteil durch Anschläge begrenzt werden, damit die beiden Geberzylinder nicht miteinander kollidieren. Außerdem macht die schwenkbare Anlenkung des Zylinderrohrs und der Kolbenstange jedes Geberzylinders eine komplizierte Bauweise und eine aufwändige Lenkkinematik erforderlich. Weiterhin offenbart die FR1.455.915 die Merkmale des Oberbegriffs des unabhängigen Anspruchs.

Ausgehend hiervon liegt der Erfindung die Aufgabe zugrunde, eine Lenkabnahme und ein Schwerlast-Transportfahrzeug der eingangs genannten Art dahingehend zu verbessern, dass erstens auf einfache mechanische Weise eine gewünschte Beziehung zwischen dem Einschlagwinkel des voreilenden ersten Fahrzeugteils und dem Einschlagwinkel des nacheilenden zweiten Fahrzeugteils hergestellt werden kann, um zum Beispiel der Lenkung eine gewünschte Aggressivität zu verleihen, dass insbesondere zweitens auf eine Beschränkung des Einschlagwinkels des nacheilenden zweiten Fahrzeugteils verzichtet werden kann, und dass insbesondere drittens die Erfassung des Einschlagwinkels des voreilenden ersten Fahrzeugteils in Bezug zum nacheilenden zweiten Fahrzeugteil mit Hilfe der Geberzylinder vereinfacht werden kann.

Die Lösung der Aufgabe erfolgt durch eine Lenkabnahme mit den Merkmalen des Anspruchs 1 sowie ein Schwerlast-Transportfahrzeug mit den Merkmalen des Anspruchs 11. Vorteilhafte Weiterbildungen ergeben sich aus den Unteransprüchen.

Der Erfindung liegt der Gedanke zugrunde, dass sich durch eine geeignete Formgebung des äußeren Umfangs der Kurvenscheibe auf einfache mechanische Weise eine gewünschte Beziehung zwischen dem Einschlagwinkel des voreilenden Fahrzeugteils und dem Einschlagwinkel des nacheilenden Fahrzeugteils herstellen lässt, die sich allein durch den Austausch der Kurvenscheibe ohne eine zusätzliche Einspeisung von Hydrauliköl in den Hydraulikkreis verändern lässt. Darüber hinaus können die Zylinderrohre der beiden Geberzylinder starr mit einem der beiden Fahrzeugteile verbunden werden, womit nicht nur die Bauweise der Geberzylinder der Lenkabnahme kompakter und einfacher gemacht, sondern auch auf Anschläge zur Begrenzung des Drehwinkels zwischen den beiden Fahrzeugteilen verzichtet werden kann, da eine Kollision der Geberzylinder nicht mehr möglich ist. Die erfindungsgemäße Lenkabnahme zeichnet sich dadurch aus, dass, wenn der Bewegungsweg der Kolbenstangen beider Geberzylinder derselbe ist, das heißt, wenn die Kolbenstange des einen Geberzylinders genau soweit eingefahren wird, wie die Kolbenstange des anderen Geberzylinders ausgefahren wird, das Abheben der freien Enden der Kolbenstangen vom äußeren Umfang der Kurvenscheibe auch dadurch verhindert werden kann, dass die freien Enden der Kolbenstangen der Geberzylinder durch mindestens einen Bügel miteinander verbunden sind, der einen konstanten Abstand zwischen den freien Enden der beiden Kolbenstangen sicherstellt.

Eine sehr stabile Führung der freien Enden der Kolbenstangen kann gemäß einer vorteilhaften Weiterbildung der Erfindung dadurch erreicht werden, wenn diese durch zwei Bügel miteinander verbunden sind, von denen jeweils einer oberhalb und einer unterhalb der Kurvenscheibe angeordnet ist. Die Bügel sind vorteilhaft so geformt, dass sie sich beiderseits von der Drehachse des Drehgelenks in einem seitlichen Abstand am Drehgelenk vorbei erstrecken.

Die Relativbewegung zwischen der Kurvenscheibe und den Kolbenstangen der beiden Geberzylinder wird dabei dadurch erreicht, dass die Kurvenscheibe fest mit einem der beiden Fahrzeugteile verbunden ist, während die Geberzylinder fest mit dem anderen der beiden Fahrzeugteile verbunden sind.

Das erfindungsgemäße Schwerlast-Transportfahrzeug umfasst neben der Lenkabnahme noch zwei Nehmerzylinder, die jeweils hydraulisch mit einem Geberzylinder verbunden sind und das nacheilende zweite Fahrzeugteil in Abhängigkeit von den von den Geberzylindern erfassten Veränderungen des Einschlagwinkels lenken.

Die erfindungsgemäßen Maßnahmen gestatten außerdem eine einfache Anpassung der Lenkabnahme an eine variierende Anzahl von Lenkachsen beim nacheilenden Fahrzeugteil, indem bei einer Vergrößerung der Anzahl von Lenkachsen entweder Geberzylinder mit größeren Durchmessern verwendet oder über der Kurvenscheibe und den Geberzylindern eine weitere Kurvenscheibe und zwei weitere Geberzylinder vorgesehen werden, um dem größeren Ölbedarf Rechnung zu tragen.

Eine bevorzugte Weiterbildung der Erfindung sieht vor, dass die freien Enden der Kolbenstangen jeweils mit mindestens einer auf dem äußeren Umfang der Kurvenscheibe abrollenden Rolle bestückt sind, um die Bewegung der freien Enden der Kolbenstangen entlang des äußeren Umfangs der Kurvenscheibe zu erleichtern.

Um ein ungewolltes Abheben der freien Enden der Kolbenstangen vom äußeren Umfang der Kurvenscheibe zu verhindern, werden die Kolbenstangen der Geberzylinder bevorzugt unter hydraulischem Druck gegen die Kurvenscheibe angepresst, so dass sie dem äußeren Umfang der Kurvenscheibe nachgeführt werden, wenn beim Lenken der Abstand zwischen diesem und dem Zylinderrohr des jeweiligen Geberzylinders zunimmt. Wenn der Abstand des äußeren Umfangs der Kurvenscheibe vom Zylinderrohr eines Geberzylinders beim Lenken abnimmt, wird hingegen die Kolbenstange von der Kurvenscheibe entgegen dem hydraulischen Anpressdruck in das Zylinderrohr gedrückt.

Das voreilende erste Fahrzeugteil und das nacheilende zweite Fahrzeugteil sind in Bezug zueinander um eine zum Untergrund senkrechte Drehachse eines Drehgelenks zwischen dem ersten und dem zweiten Fahrzeugteil drehbar, wobei sich die Drehachse gemäß einer weiteren bevorzugten Weiterbildung der Erfindung durch die Kurvenscheibe hindurch erstreckt. Zur Festlegung einer gewünschten, vorzugsweise nicht-proportionalen Beziehung zwischen dem Lenk- oder Einschlagverhalten des nacheilenden zweiten Fahrzeugteils und dem Lenk- oder Einschlagverhalten des voreilenden ersten Fahrzeugteils kann die Kurvengeometrie des äußeren Umfangs der Kurvenscheibe entlang von denjenigen Abschnitten, an denen sich die freien Enden der Kolbenstangen bzw. die Rollen entlang bewegen, entsprechend gewählt werden. Dabei kann das Verhältnis zwischen dem Einschlagwinkel des voreilenden ersten Fahrzeugteils und dem zugehörigen Einschlagwinkel des nacheilenden zweiten Fahrzeugteils gesteuert werden, indem entlang eines dem Einschlagwinkel des voreilenden ersten Fahrzeugteils entsprechenden Abschnitts des äußeren Umfangs der Kurvenscheibe der Abstand des äußeren Umfangs der Kurvenscheibe von der Drehachse in gewünschter Weise verändert wird. Zum andern kann die Aggressivität der Lenkung gesteuert werden, indem entlang eines dem Einschlagwinkel des voreilenden ersten Fahrzeugteils entsprechenden Abschnitts des äußeren Umfangs der Kurvenscheibe dessen Steigung, d.h. die erste Ableitung des Abstands, in gewünschter Weise verändert wird. Auf diese Weise kann das Lenkverhalten des nacheilenden zweiten Fahrzeugteils in idealer Weise beeinflusst werden.

Um zu erreichen, dass die Lenkeinschlagbewegungen der Lenkachse des nacheilenden zweiten Fahrzeugteils beim Einschlagen nach links und beim Einschlagen nach rechts identisch sind, ist der äußere Umfang der Kurvenscheibe zweckmäßig spiegelsymmetrisch zu einer vertikalen Mittelebene des einen Fahrzeugteils durch die Drehachse des Drehgelenks, während die Geberzylinder zweckmäßig spiegelsymmetrisch zu einer vertikalen Mittelebene des anderen Fahrzeugteils durch die Drehachse des Drehgelenks sind.

Dadurch wird bei jeder Veränderung des Einschlagwinkels des voreilenden ersten Fahrzeugteils die Kolbenstange von einem der Geberzylinder um ein definiertes Maß eingefahren, während die Kolbenstange des anderen Geberzylinders um dasselbe Maß ausgefahren wird. Auf diese Weise kann die Lenkung des Schwerlast-Transportfahrzeugs vereinfacht werden, indem gemäß einer weiteren bevorzugten Weiterbildung der Erfindung jeder der beiden Geberzylinder hydraulisch mit einem der beiden Nehmerzylinder verbunden und vom anderen Geberzylinder und Nehmerzylinder hydraulisch getrennt ist. Eventuelle kleinere Differenzmengen beim Ein- und Ausfahren der Kolbenstangen der beiden Geberzylinder können durch die unter Druck stehende Hydraulikflüssigkeit ausgeglichen werden, so dass der Ein- bzw. Ausfahrweg der beiden Nehmerzylinder stets dieselbe Länge aufweist.

Vorteilhaft weisen die beiden Geberzylinder jeweils eine zur Drehachse des Drehgelenks senkrechte Längsmittelachse auf, wobei sie zweckmäßig auf entgegengesetzten Seiten der Drehachse angeordnet sind, so dass ihre Längsmittelachsen miteinander fluchten. Auf diese Weise kann ein maximaler Einschlagwinkel erreicht werden, ohne dass sich die freien Enden der beiden Kolbenstangen der Geberzylinder über denselben Abschnitt des äußeren Umfangs der Kurvenscheibe bewegen müssen.

Zur Vermeidung von ruckartigen Lenkeinschlagbewegungen des nacheilenden zweiten Fahrzeugteils sieht eine zweckmäßige Weiterbildung der Erfindung vor, dass sich zumindest in den Bereichen des äußeren Umfangs der Kurvenscheibe, an denen sich beim Lenken die freien Enden der Kolbenstangen entlang bewegen, der Abstand zwischen dem äußeren Umfang der Kurvenscheibe und der Drehachse des Drehgelenks stufenlos bzw. ohne Unstetigkeiten allmählich verändert.

Eine weitere vorteilhafte Weiterbildung der Erfindung sieht vor, dass die Kurvenscheibe das Drehgelenk umgibt, über das sich vorteilhaft eines von dem voreilenden ersten Fahrzeugteil und dem nacheilenden zweiten Fahrzeugteil auf dem jeweils anderen Fahrzugteil abstützt.

Die Zylinderrohre der beiden Geberzylinder können starr mit dem voreilenden ersten Fahrzeugteil verbunden sein, während sich die Kurvenscheibe zusammen mit dem nacheilenden zweiten Fahrzeugteil um die Drehachse des Drehgelenks dreht. Diese Alternative wird bevorzugt bei einer Drehschemellenkung eingesetzt, wo der mit Hilfe der Lenkabnahme abgenommene Einschlagwinkel des voreilenden ersten Fahrzeugteils zur Zwangslenkung von mindestens einer Lenkachse eines Nachläufers verwendet wird, wie zum Beispiel bei dem Transportfahrzeug aus der eingangs genannten DE 20 2012 010 545 U1.

In diesem Fall umfasst das Drehgelenk zwischen den beiden Fahrzeugteilen vorzugsweise ein Kugelgelenk. Beiderseits des Kugelgelenks sind vorteilhaft Schwenkgelenke vorgesehen, die eine Kippbewegung des voreilenden ersten Fahrzeugteils in Bezug zum nacheilenden zweiten Fahrzeugteil um eine Fahrzeugquerachse ermöglichen.

Die Zylinderrohre der beiden Geberzylinder können jedoch auch starr mit dem nacheilenden zweiten Fahrzeugteil verbunden sein, während die Kurvenscheibe starr mit dem voreilenden ersten Fahrzeugteil verbunden ist, so dass sie sich bei Lenkbewegungen des voreilenden ersten Fahrzeugteils zusammen mit diesem um die Drehachse des Drehgelenks zwischen den beiden Fahrzeugteilen dreht.

Diese Alternative wird bevorzugt eingesetzt, wenn das voreilende erste Fahrzeugteil eine Zugmaschine und das nacheilende zweite Fahrzeugteil ein Sattelauflieger mit einem in Bezug zur Zugmaschine drehbaren Schwanenhals und mindestens einer von den Nehmerzylindern gelenkten Lenkachse ist.

Im Folgenden wird die Erfindung anhand eines in der Zeichnung dargestellten Ausführungsbeispiels näher erläutert.

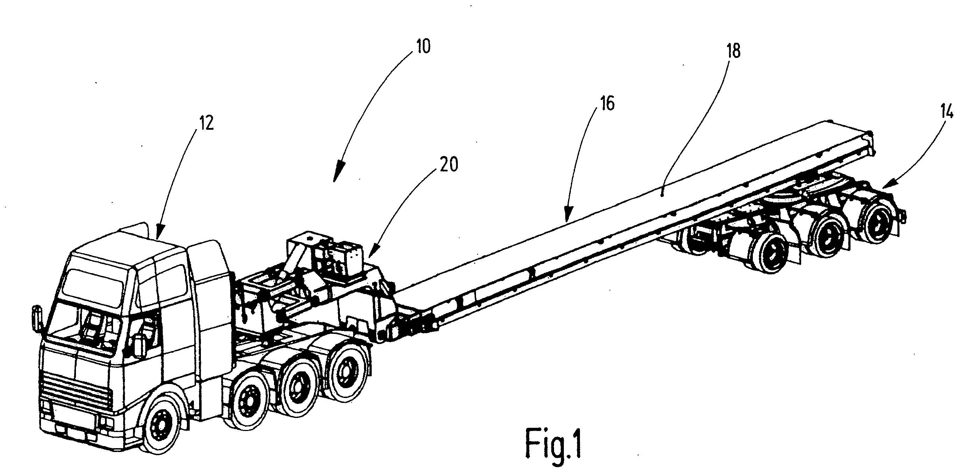

- Fig. 1: zeigt eine perspektivische Ansicht eines unbeladenen erfindungsgemäßen Schwerlast-Transportfahrzeugs mit einer Zugmaschine und mit einem Nachläufer, der durch einen Teleskopträger mit Schwanenhals mit der Zugmaschine verbunden ist;
- Fig. 2: zeigt eine Seitenansicht des Transportfahrzeugs;
- Fig. 3: zeigt eine Oberseitenansicht des Transportfahrzeugs beim Durchfahren einer Kurve;
- Fig. 4: zeigt eine vergrößerte Seitenansicht des Nachläufers und eines Teils des Teleskopträgers;
- Fig. 5: zeigt eine vergrößerte Seitenansicht eines Drehschemels zwischen dem Nachläufer und dem Teleskopträger;
- Fig. 6: zeigt eine Rückseitenansicht des Drehschemels;

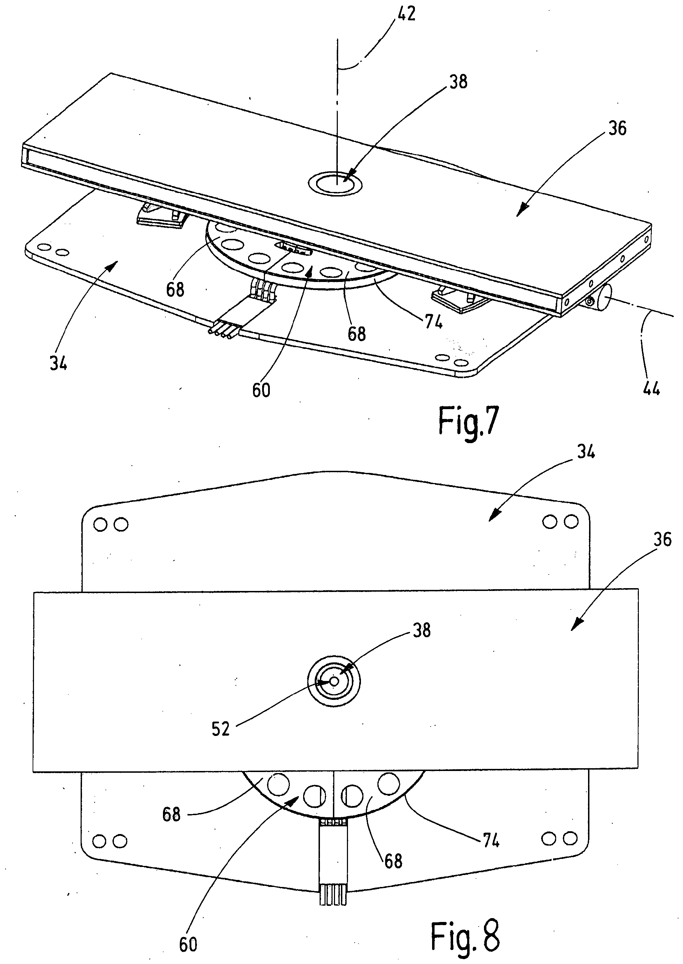

- Fig. 7: zeigt eine perspektivische Ansicht des Drehschemels mit einer Tragplatte, einer Schemelplatte und einer dazwischen angeordneten Lenkabnahme;
- Fig. 8: zeigt eine Oberseitenansicht des Drehschemels;
- Fig. 9: zeigt eine perspektivische Oberseitenansicht der Tragplatte und der Lenkabnahme;
- Fig. 10: zeigt eine Oberseitenansicht der Tragplatte und der Lenkabnahme bei Geradeausfahrt;
- Fig. 11: zeigt eine Oberseitenansicht der Tragplatte und der Lenkabnahme beim Durchfahren einer Linkskurve;
- Fig. 12: zeigt eine Oberseitenansicht der Tragplatte und der Lenkabnahme beim Durchfahren einer Rechtskurve;
- Fig. 13: zeigt eine vergrößerte perspektivische Ansicht von einem Teil einer Kurvenscheibe und einem Geberzylinder der Lenkabnahme;
- Fig. 14: zeigt eine vergrößerte perspektivische Oberseitenansicht der Kurvenscheibe;
- Fig. 15: zeigt eine vergrößerte perspektivische Ansicht von einem der Geberzylinder der Lenkabnahme;
- Fig. 16: zeigt eine andere vergrößerte perspektivische Ansicht des Geberzylinders;
- Fig. 17: zeigt eine perspektivische Unterseitenansicht der Schemelplatte und der Lenkabnahme;
- Fig. 18: zeigt eine andere perspektivische Unterseitenansicht der Schemelplatte und der Lenkabnahme;

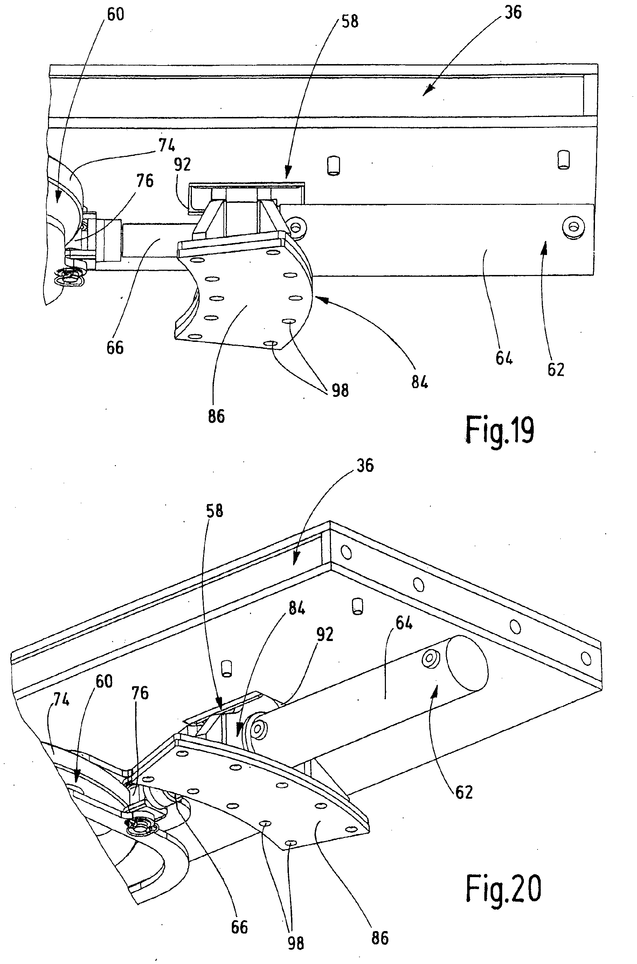

- Fig. 19: zeigt eine vergrößerte perspektivische Unterseitenansicht von einem Teil der Schemelplatte und der Lenkabnahme;
- Fig. 20: zeigt eine andere vergrößerte perspektivische Unterseitenansicht von einem Teil der Schemelplatte und der Lenkabnahme.

Das in der Zeichnung dargestellte Schwerlast-Transportfahrzeug 10 besteht im Wesentlichen aus einer Zugmaschine 12, einem im Abstand hinter der Zugmaschine 12 angeordneten dreiachsigen Nachläufer 14, sowie einem Teleskopträger 16, der eine Lastauflagefläche 18 aufweist und an seinem vorderen Ende durch einen Schwanenhals 20 mit der Zugmaschine 12 verbunden ist.

Statt durch den Teleskopträgers 16 kann die Zugmaschine 12 jedoch auch unmittelbar durch eine langgestreckte Last, wie beispielsweise ein Rotorblatt einer Windkraftanlage, mit dem Nachläufer 14 verbunden sein.

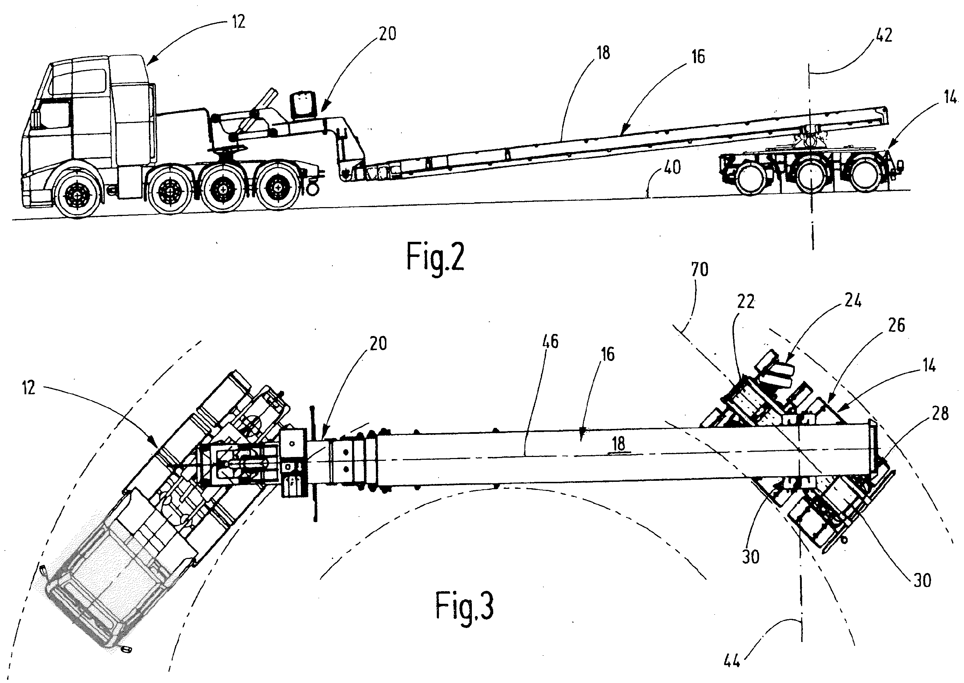

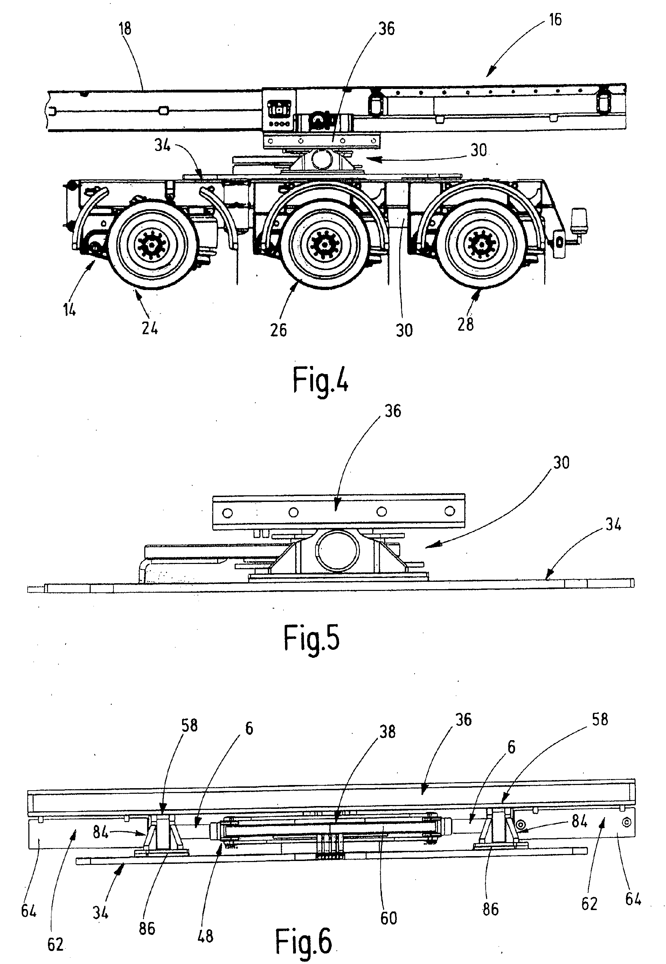

Wie am besten in Fig. 3 und 4 dargestellt, weist der Nachläufer 14 ein Fahrgestell 22 auf, an dem die Räder der drei Achsen 24, 26, 28 beiderseits eines Längsträgers 30 befestigt sind. Bei den hinteren Achsen 26 und 28 handelt es sich um Starrachsen, deren Räder nicht lenkbar sind. Bei der vorderen Achse 24 handelt es sich um eine Lenkachse, deren Räder lenkbar sind.

Oberhalb von der mittleren Achse 26 weist der Nachläufer 14 einen Drehschemel 30 auf. Der Drehschemel 30 umfasst eine unbeweglich mit dem Nachläufer 14 verbundene und auf der Oberseite des Längsträgers 30 abgestützte ebene Tragplatte 34, eine fest mit dem hinteren Ende des Teleskopträgers 16 verbundene bzw. fest mit dem hinteren Ende der Last verbindbare rechteckige Schemelplatte 36, sowie ein zwischen der Tragplatte 34 und der Schemelplatte 36 angeordnetes Drehgelenk 38. Das Drehgelenk 38 gestattet einerseits eine Drehung des hinteren Endes des Teleskopträgers 16 bzw. der Last in Bezug zum Nachläufer 14 um eine durch die Mitte des Drehschemels 30 verlaufende, zum Untergrund 40 senkrechte Drehachse 42 (Fig. 2) und andererseits eine begrenzte Kippbewegung des hinteren Endes des Teleskopträgers 16 bzw. der Last in Bezug zum Nachläufer 14 um eine zum Untergrund 40 parallele Querachse 44 (Fig. 3), die senkrecht zur Drehachse 42 und zu einer Längsmittelachse 46 des Teleskopträgers 16 bzw. der Last ist.

Zwischen der Tragplatte 34 und der Schemelplatte 36 ist eine Lenkabnahme 48 angeordnet, mit der ein Einschlagwinkel des Teleskopträgers 16 bzw. der langgestreckten Last in Bezug zum Nachläufer 14, d.h. der Drehwinkel der beiden Fahrzeugteile 14, 16 in Bezug zueinander um die Drehachse 42 beim Einschlagen des Teleskopträgers 16, erfasst oder abgenommen werden kann, um die Lenkachse 24 des Nachläufers 14 in Abhängigkeit von diesem Lenkeinschlagwinkel mit einem gewünschten Lenkverhalten zu lenken.

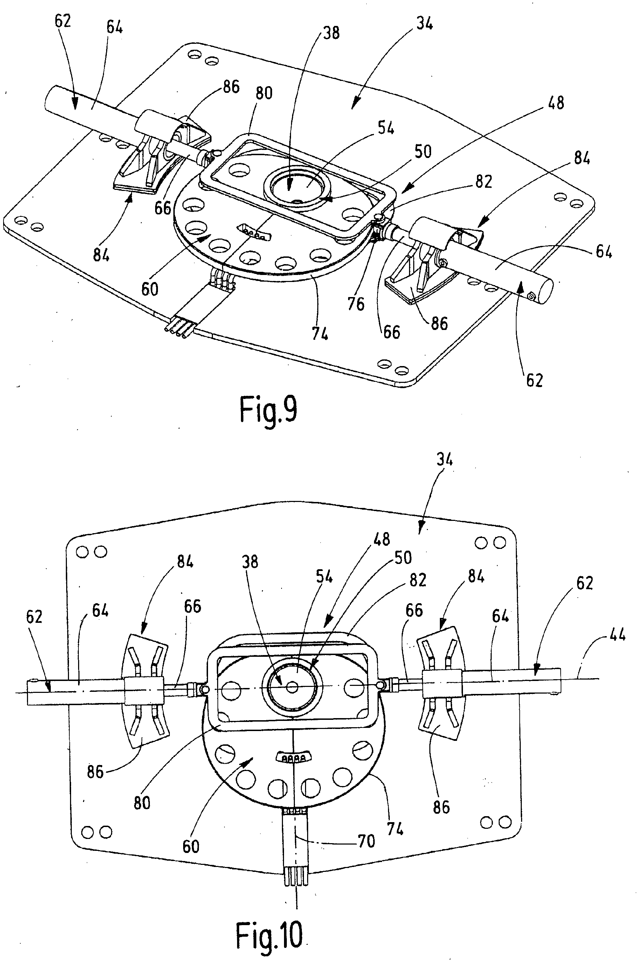

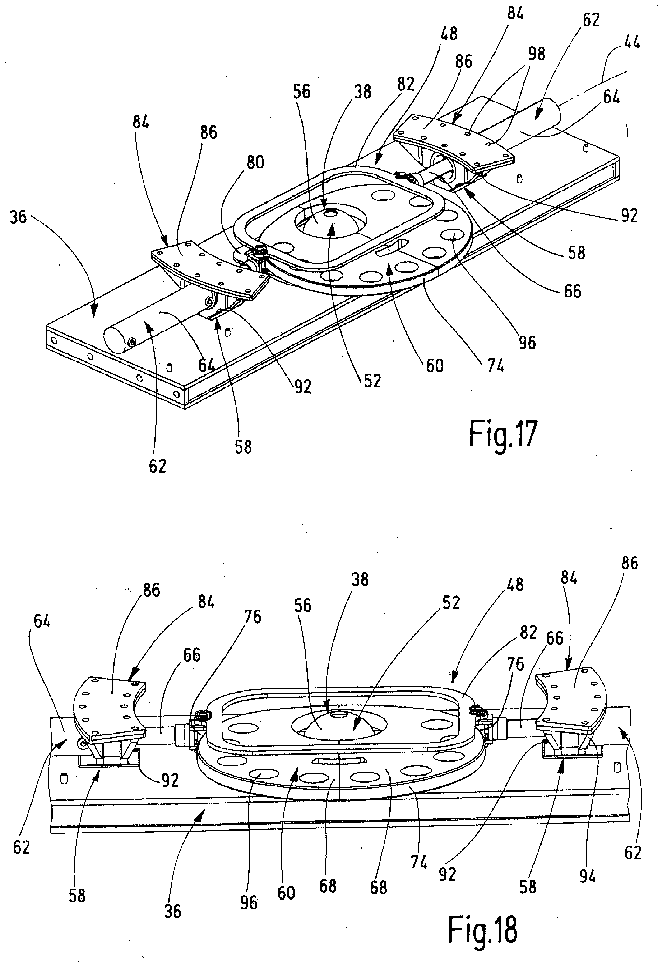

Das als Kugelgelenk ausgebildete Drehgelenk 38 umfasst eine starr mit der Tragplatte 34 verbundene und nach oben über deren Oberseite überstehende Gelenkpfanne 50 (Figuren 9 bis 12), sowie einen starr mit der Schemelplatte 36 verbundenen, nach unten über deren Unterseite überstehenden Gelenkkopf 52 (Figuren 17 und 18). Wie am besten in Fig. 9 dargestellt, umgibt die Gelenkpfanne 50 eine Vertiefung 54 mit einer zur Fahrzeughochachse 42 konzentrischen konkaven sphärischen Oberfläche. Die Vertiefung 54 dient zur Aufnahme des Kugelkopfs 52, der sich mit einer teilsphärischen Oberfläche 56 auf der sphärischen Oberfläche der Vertiefung 54 abstützt. Um ein Kippen der Schemelplatte 36 um die Längsmittelachse 46 des Teleskopträgers 16 bzw. der Last zu verhindern, ist die Schemelplatte 36 entlang der Querachse 44 beiderseits des Drehgelenks 38 über jeweils ein zusätzliches Schwenkgelenk 58 auf der Tragplatte 34 abgestützt, wobei die zwei Schwenkgelenke 58 Kippbewegungen um die Querachse 44 zulassen.

Die Lenkabnahme 48 umfasst eine in einem vertikalen Abstand fest auf der Oberseite der Tragplatte 34 montierte und zur Tragplatte 34 parallele Kurvenscheibe 60, die sich zusammen mit dem Nachläufer 14 um die Drehachse 42 dreht. Weiter umfasst die Lenkabnahme 46 zwei hydraulische Geberzylinder 62, die sich zusammen mit dem hinteren Ende des Teleskopträgers 16 bzw. der langgestreckten Last um die Drehachse 42 drehen und jeweils ein Zylinderrohr 64 und eine Kolbenstange 66 umfassen.

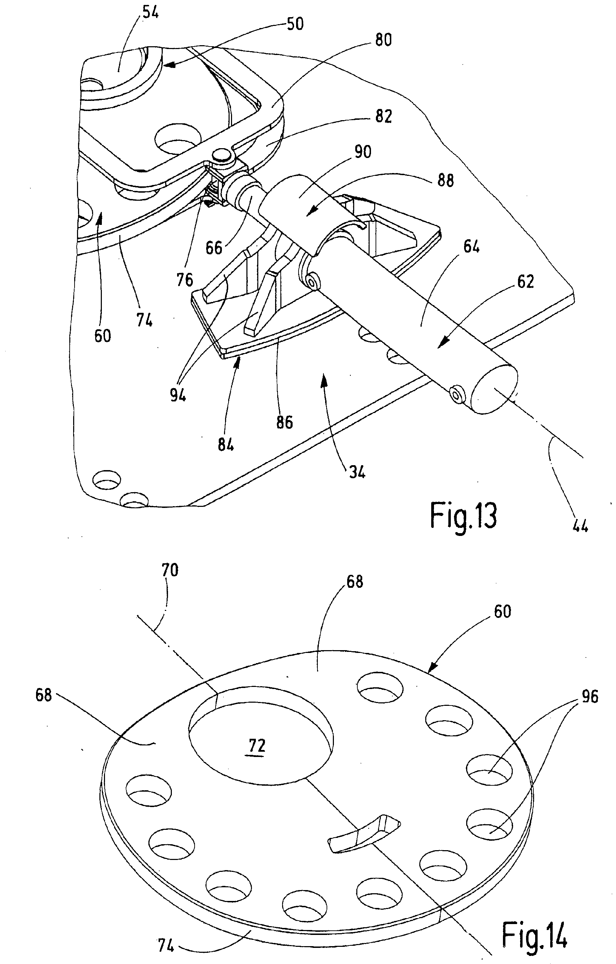

Wie in Fig. 14 dargestellt, besteht die aus Stahlblech oder aus einem leichten aber festen Kunststoffmaterial hergestellte Kurvenscheibe 60 aus zwei Teilen 68, die zu einer durch die Drehachse 42 verlaufenden vertikalen Längsmittelebene 70 des Nachläufers 14 spiegelsymmetrisch sind. Die Kurvenscheibe 60 weist eine Öffnung 72 für die Gelenkpfanne 50 auf, so dass sie um diese herum im Abstand oberhalb der Tragplatte 34 befestigt werden kann. Die Kurvenscheibe 60 besitzt weiter eine um ihren Umfang umlaufende und zur Oberfläche der Tragplatte 34 senkrechte äußere Umfangsfläche 74.

Auf der Umfangsfläche 74 rollen zwei Rollen 76 ab, von denen jede um eine zur Drehachse 42 parallele Achse 78 frei drehbar am freien Ende von einer der beiden Kolbenstangen 66 der Geberzylinder 62 befestigt ist. Wenn sich das hintere Ende des Teleskopträgers 16 bzw. das hintere Ende der langgestreckten Last beim Einschlagen in Bezug zum Nachläufer 14 um die Drehachse 42 dreht, bewegen sich die beiden Rollen 76 an der äußeren Umfangsfläche 74 der Kurvenscheibe 60 entlang.

Die äußere Umfangsfläche 74 weist entlang des Bewegungswegs der Rollen 76 keine Unstetigkeiten auf, um ruckfreie Lenkbewegungen zu gewährleisten. Die Kurvengeometrie des äußeren Umfangs bzw. der Umfangsfläche 74 der Kurvenscheibe 60 ist in Bezug zur Drehachse 42 so ausgebildet, dass die Kolbenstange 66 von einem der Geberzylinder 62 eingefahren und die Kolbenstange 66 des anderen Geberzylinder 62 um dasselbe Maß ausgefahren wird, wenn sich der Nachläufer 14 und der Teleskopträger 16 bzw. die Last in Bezug zueinander um die Drehachse 42 drehen. Dies wird dadurch erreicht, dass ausgehend von einer Drehstellung (Fig. 9 und 10), in der die Längsmittelachse 70 des Nachläufers 14 in Draufsicht mit der Längsmittelachse 46 des Teleskopträgers 16 bzw. der Last fluchtet, in beiden Drehrichtungen der Abstand zwischen der Rolle 76 und der Drehachse 42 bei einem der zwei Geberzylinder 62 abnimmt und beim anderen Geberzylinder 62 um dasselbe Maß zunimmt.

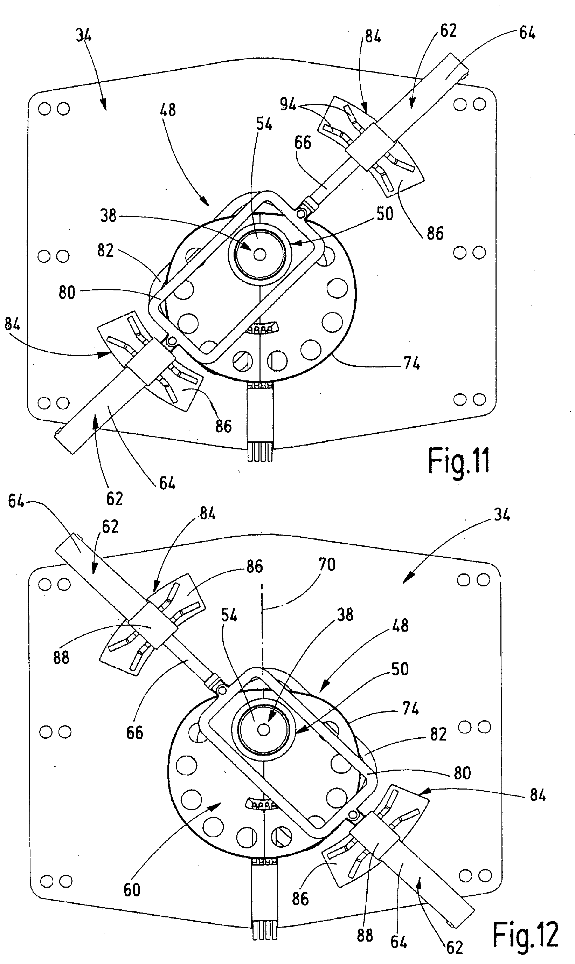

Mit der an die Anzahl der Lenkachsen 24 des Nachläufers 14 angepassten Kurvengeometrie des äußeren Umfangs bzw. der Umfangsfläche 74 der Kurvenscheibe 60 lässt sich das Lenkverhalten des Fahrzeugs 10 in idealer Weise beeinflussen. Zum einen kann zwischen der Drehstellung in Fig. 9 und 10 einerseits und den beiden Drehstellungen in Fig. 11 bzw. 12 andererseits, in denen der Teleskopträger 16 bzw. die Last mit unterschiedlichen Drehrichtungen und einem Einschlagwinkel von 45 Grad in Bezug zum Nachläufer 14 eingeschlagen ist, der Abstand zwischen der Rolle 76 und der Drehachse 42 um ein gewünschtes Maß verändert werden. Zum anderen kann die Steigung des äußeren Umfangs bzw. der Umfangsfläche 74 der Kurvenscheibe 60, d.h. die erste Ableitung des Abstands, in einer gewünschten Weise verändert werden. Das Maß der Änderung des Abstands der Umfangsfläche 74 von der Drehachse 42 zwischen der Drehstellung in Fig. 9 und 10 einerseits und den beiden Drehstellungen in Fig. 11 bzw. 12 andererseits bestimmt das Verhältnis zwischen dem Einschlagwinkel des Teleskopträgers 16 bzw. der Last in Bezug zum Nachläufer 14 einerseits und dem Einschlagwinkel der Lenkachse 24 des Nachläufers 14 andererseits. Mit anderen Worten kann durch eine vorgegebene Veränderung des Abstands bzw. des Bewegungswegs der Kolbenstangen 66 der Geberzylinder 62 zwischen zwei Drehstellungen der Einschlagwinkel der Lenkachse 24 des Nachläufers 14 zwischen diesen Drehstellungen um ein gewünschtes Maß verändert werden. Die Steigung des äußeren Umfangs bzw. der Umfangsfläche 74 der Kurvenscheibe 60 bestimmt dagegen die Aggressivität der Lenkung der Lenkachse 24 des Nachläufers 14. Mit anderen Worten kann durch eine vorgegebene Veränderung der Steigung die Geschwindigkeit des Einlenkens des Nachläufers 14 verändert werden.

Die beiden Geberzylinder 62 sind Teil einer hydraulischen Zwei-Kreis-Lenkeinrichtung (nicht dargestellt) des Nachläufers 14, die neben den Geberzylindern 62 zwei Nehmerzylinder (nicht dargestellt) umfasst, wobei jeder Kreis einen Geberzylinder 62 und einen Nehmerzylinder umfasst. Die beiden Nehmerzylinder greifen jeweils an entgegengesetzten Seiten der Lenkachse 24 an, wobei jeder Nehmerzylinder durch Leitungen (nicht dargestellt) mit einem der Geberzylinder 62 verbunden ist. Hingegen sind die beiden Kreise der Lenkeinrichtung nicht miteinander verbunden.

Wie am besten in den Figuren 9 bis 12 dargestellt, sind die beiden Geberzylinder 62 auf entgegengesetzten Seiten des Drehgelenks 38 und der Kurvenscheibe 60 angeordnet, wobei ihre Längsmittelachsen miteinander fluchten und die Drehachse 42 schneiden. Die Kolbenstangen 66 sind zur Kurvenscheibe 60 hin gerichtet.

Um ein Abheben der Rollen 76 von der äußeren Umfangsfläche 70 zu vermeiden, sind die Geberzylinder 62 im jeweiligen Kreis mit einem hydraulischen Druck von etwa 30 bar vorgespannt, so dass die Kolbenstangen 66 die Rollen 76 gegen die Umfangsfläche 74 anpressen. Außerdem sind die Rollen 76 der beiden Geberzylinder 62 durch zwei O-förmige Bügel 80, 82 miteinander verbunden, um einen gleich bleibenden Abstand zwischen den Rollen 76 bzw. den freien Enden der beiden Kolbenstangen 66 der Geberzylinder 62 sicherzustellen. Der eine 80 der beiden Bügel 80, 82 ist oberhalb von der Kurvenscheibe 60 angeordnet und an den oberen Enden der Rollen 76 angelenkt, während der andere Bügel 82 unterhalb von der Kurvenscheibe 60 angeordnet und an den unteren Enden der Rollen 76 angelenkt ist. Durch die hydraulische Vorspannung der beiden Hydraulikkreise und die Bügel 80 wird gewährleistet, dass die Rollen 76 beim Lenken dem äußeren Umfang der Kurvenscheibe 60 nachgeführt werden und nicht von der Umfangsfläche 74 abheben, und dass der Bewegungsweg der Kolbenstangen 66 der beiden Geberzylinder 62 stets genau derselbe ist.

Die beiden zur Drehachse 42 spiegelsymmetrischen Bügel 80, 82 umschließen jeweils eine allgemein rechteckige Öffnung mit gerundeten Ecken, durch die sich das Drehgelenk 38 entlang der Drehachse 42 hindurch erstreckt.

Wie am besten in den Figuren 17 und 18 dargestellt, sind die Zylinderrohre 64 der beiden Geberzylinder 62 mittels der Schwenkgelenke 58 derart an der Unterseite der Schemelplatte 36 gehaltert, dass sie sich mit der Schemelplatte 36 mitdrehen, jedoch ein Kippen der Schemelplatte 36 um die Querachse 44 gestatten, die mit den fluchtenden Längsmittelachsen der Geberzylinder 62 zusammenfällt. Zum Haltern der Zylinderrohre 64 der Geberzylinder 62 sind die Zylinderrohre 64 jeweils mit einer Halterung 84 versehen, die in Bezug zur Tragplatte 34 verschiebbar ist, über die ein Teil der auf die Schemelplatte 36 einwirkenden Last auf die Tragplatte 34 übertragen wird und auf der die Schemelplatte 36 schwenkbar abgestützt ist.

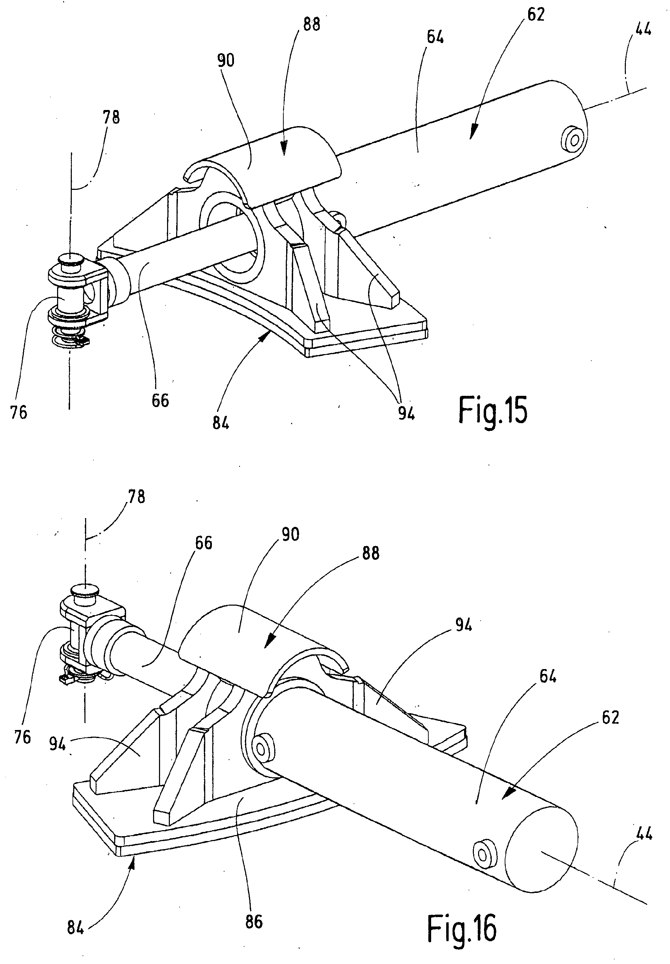

Die Halterung 84 umgibt das jeweilige Zylinderrohr 64 und ist starr mit diesem verbunden. Die Halterung 84 weist an ihrer der Tragplatte 34 zugewandten Unterseite eine Gleitplatte 86 mit einer zur Oberseite der Tragplatte 34 parallelen ebenen Gleitfläche auf, die beim Lenken um die Drehachse 42 herum über die Tragplatte 34 gleitet, wie am besten durch Vergleich von Fig. 11 und 12 ersichtlich ist. Wie am besten in Fig. 13, 15 und 16 dargestellt, weist die Halterung 84 auf ihrer der Schemelplatte 36 zugewandten Oberseite einen Sattel 88 mit einer zur Querachse 44 koaxialen konvexen teilzylindrischen Oberfläche 90 auf. Wie am besten in Fig. 17 und 18 dargestellt, greift der Sattel 88 in eine Vertiefung 92 in der Unterseite der Schemelplatte 36 ein, wobei er innerhalb der Vertiefung 92 gegen eine komplementäre konkave teilzylindrische Oberfläche (nicht sichtbar) der Schemelplatte 36 anliegt und zusammen mit dieser das Schwenkgelenk 58 bildet, das eine Kippbewegung des Teleskopträgers 16 um die Querachse 44 in Bezug zum Nachläufer 14 ermöglicht. Der Sattel 88 ist durch Stützen 94 starr mit der Gleitplatte 86 verbunden.

Zur Gewichtsreduzierung sind die Kurvenscheibe 60 und die Gleitplatte 86 mit Bohrungen 96 bzw. 98 versehen. Die Bohrungen 98 der Gleitplatte 86 werden zudem mit Schmierfett gefüllt, um die Gleitbewegung der Halterungen 82 über die Tragplatte 34 zu schmieren.

Mit der zuvor beschriebenen Lenkabnahme 46 ist eine einfache Anpassung an eine variierende Anzahl von Lenkachsen des Nachläufers 14 möglich, indem bei einer Vergrößerung der Anzahl von Lenkachsen an Stelle jedes Geberzylinders 62 ein Geberzylinder 62 mit einem größeren Durchmesser verwendet oder zwischen der Schemelplatte 36 und der Tragplatte 34 eine weitere Kurvenscheibe und zwei weitere Geberzylinder vorgesehen werden, um dem größeren Ölbedarf für die Lenkung der weiteren Lenkachsen Rechnung zu tragen.

## Patentansprüche

1. Lenkabnahme (48) zur Erfassung eines Einschlagwinkels zwischen einem voreilenden ersten Fahrzeugteil (16) und einem nacheilenden zweiten Fahrzeugteil (14) eines Fahrzeugs (10), mit zwei Geberzylindern (62), die jeweils ein Zylinderrohr (64) und eine Kolbenstange (66) umfassen, mit einer Kurvenscheibe (60), an deren Umfang sich die freien Enden der Kolbenstangen (66) bei Veränderungen des Einschlagwinkels entlang bewegen, wobei die Kolbenstangen (66) in Abhängigkeit vom Einschlagwinkel mehr oder weniger stark ein- oder ausgefahren werden, **dadurch gekennzeichnet, dass** die freien Enden der Kolbenstangen (66) der beiden Geberzylinder (62) durch mindestens einen Bügel (80, 82) miteinander verbunden sind.

2. Lenkabnahme nach Anspruch 1, **dadurch gekennzeichnet, dass** die freien Enden der Kolbenstangen (66) durch zwei Bügel (80,82) verbunden sind, von denen jeweils einer oberhalb bzw. unterhalb der Kurvenscheibe (60) angeordnet ist.

3. Lenkabnahme (48) nach einem der Ansprüche 1 oder 2, **dadurch gekennzeichnet, dass** die freien Enden der Kolbenstangen (66) mit mindestens einer Rolle (76) versehen sind, die bei Veränderungen des Einschlagwinkels auf dem Umfang der Kurvenscheibe (60) abrollt.

4. Lenkabnahme (48) nach Anspruch 3, **dadurch gekennzeichnet, dass** die Geberzylinder (62) die Rollen (76) gegen den Umfang der Kurvenscheibe (60) anpressen.

5. Lenkabnahme nach einem der vorangehenden Ansprüche, **dadurch gekennzeichnet, dass** die Kurvenscheibe (60) ein Kugelgelenk (38) umgibt, über das sich einer von dem voreilenden ersten Fahrzeugteil (16) und dem nacheilenden zweiten Fahrzeugteil (14) auf dem jeweils anderen Fahrzugteil (16; 14) abstützt.

6. Lenkabnahme nach einem der vorangehenden Ansprüche, **gekennzeichnet durch** zwei beiderseits der Kurvenscheibe (60) angeordnete Schwenkgelenke (58), über die sich einer von dem voreilenden ersten Fahrzeugteil (16) und dem nacheilenden zweiten Fahrzeugteil (14) auf dem jeweils anderen Fahrzugteil (16; 14) abstützt.

7. Lenkabnahme nach einem der vorangehenden Ansprüche, **dadurch gekennzeichnet, dass** die beiden Geberzylinder (62) auf entgegengesetzten Seiten der Kurvenscheibe (60) angeordnet sind und fluchtende Längsmittelachsen aufweisen.

8. Lenkabnahme nach einem der vorangehenden Ansprüche, **dadurch gekennzeichnet, dass** bei jeder Veränderung des Einschlagwinkels die Kolbenstange (66) von einem der beiden Geberzylinder (62) um ein definiertes Maß eingefahren und die Kolbenstange (66) des anderen der beiden Geberzylinder (62) um dasselbe Maß ausgefahren wird.

9. Lenkabnahme nach einem der Ansprüche 1 bis 8, **dadurch gekennzeichnet, dass** die beiden Geberzylinder (62) fest mit dem voreilenden Fahrzeugteil (16) verbunden sind und dass sich die Kurvenscheibe (60) zusammen mit dem nacheilenden Fahrzeugteil (14) in Bezug zum voreilenden Fahrzeugteil (16) dreht.

10. Lenkabnahme nach einem der Ansprüche 1 bis 8, **dadurch gekennzeichnet, dass** die beiden Geberzylinder fest mit dem nacheilenden Fahrzeugteil verbunden sind und dass sich die Kurvenscheibe zusammen mit dem voreilenden Fahrzeugteil in Bezug zum nacheilenden Fahrzeugteil dreht.

11. Schwerlast-Transportfahrzeug (10) mit einem voreilenden ersten Fahrzeugteil (16), einem nacheilenden zweiten Fahrzeugteil (14) und einer Lenkeinrichtung zum Lenken des nacheilenden zweiten Fahrzeugteils (14) in Abhängigkeit von Veränderungen eines Einschlagwinkels des voreilenden ersten Fahrzeugteils (16) in Bezug zum nacheilenden zweiten Fahrzeugteil (14), **gekennzeichnet durch** eine Lenkabnahme (48) nach einem der vorangehenden Ansprüche und sowie durch mindestens zwei Nehmerzylinder, die jeweils hydraulisch mit einem Geberzylinder (62) verbunden sind und den nacheilenden zweiten Fahrzeugteil (14) in Abhängigkeit von den von den Geberzylindern (62) erfassten Veränderungen des Einschlagwinkels lenken.

12. Schwerlast-Transportfahrzeug nach Anspruch 11, **dadurch gekennzeichnet, dass** die Nehmerzylinder paarweise auf mindestens eine Lenkachse (24) des nacheilenden zweiten Fahrzeugteils (14) einwirken.

13. Schwerlast-Transportfahrzeug nach Anspruch 12, **dadurch gekennzeichnet, dass** jeder Geberzylinder (62) hydraulisch mit einem der auf eine Lenkachse (24) einwirkenden Nehmerzylinder verbunden und von dem anderen Geberzylinder (62) und dem anderen der auf eine Lenkachse (24) einwirkenden Nehmerzylinder hydraulisch getrennt ist.

14. Schwerlast-Transportfahrzeug nach einem der Ansprüche 12 bis 13, **dadurch gekennzeichnet, dass** die Geberzylinder (62) hydraulisch vorgespannt sind.

## Claims

1. Device (48) for detecting a turning angle between a leading first vehicle part (16) and a trailing second vehicle part (14) of a vehicle (10), comprising two master cylinders (62), each having a cylinder tube (64) and a piston rod (66), further comprising a cam plate (60), along whose circumference the free ends of the piston rods (66) move during a change of the turning angle, whereby the piston rods (66) are moved, depending on the turning angle, more or less in and out, **characterized in that** the free ends of the piston rods (66) of the two master cylinders (62) are connected by at least one bracket (80, 82).

2. Device according to claim 1, **characterized in that** the free ends of the piston rods (66) are connected via two brackets (80, 82), one bracket being arranged above and one bracket being arranged below the cam plate (60).

3. Device (48) according to one of the claims 1 or 2, **characterized in that** the free ends of the piston rods (66) are provided with at least one roller (76), which, during changes of the turning angle, rolls along the circumference of the cam plate (60).

4. Device (48) according to claim 3, **characterized in that** the master cylinders (62) press the rollers (76) against the circumference of the cam plate (60).

5. Device according to one of the preceding claims, **characterized in that** the cam plate (60) surrounds a ball joint (38), by which one of the leading first vehicle part (16) and the trailing second vehicle part (14) rests on the corresponding other vehicle part (16; 14).

6. Device according to one of the preceding claims, **characterized by** swivel joints (58) being arranged on both sides of the cam plate (60), by which one of the leading first vehicle part (16) and the trailing second vehicle part (14) rests on the corresponding other vehicle part (16; 14).

7. Device according to one of the preceding claims, **characterized in that** the two master cylinders (62) are arranged on opposite sides of the cam plate (60) and are provided with aligned central longitudinal axes.

8. Device according to one of the preceding claims, **characterized in that** by each change of the turning angle the piston rod (66) of each of the two master cylinders (62) is retracted by a defined amount and the piston rod (66) of the other one of the two master cylinders (62) is extended by the same amount.

9. Device according to one of the claims 1 to 8, **characterized in that** the two master cylinders (62) are firmly connected with the leading vehicle part (16), and that the cam plate (60) turns together with the trailing vehicle part (14) in relation to the leading vehicle part (16).

10. Device according to one of the claims 1 to 8, **characterized in that** the two master cylinders are firmly connected with the trailing vehicle part, and that the cam plate turns together with the leading vehicle part in relation to the trailing vehicle part.

11. Heavy duty transport vehicle (10) with a leading first vehicle part (16), a trailing second vehicle part (14) and a steering arrangement for steering the trailing vehicle part (14) depending on changes of the turning angle of the leading first vehicle part (16) in relation to the trailing second vehicle part (14), **characterized by** a Device (48) according to one of the previous claims and by at least two slave cylinders, which are hydraulically connected with a master cylinder (62) and which steer the trailing second vehicle part (14) depending on changes of the turning angle detected by the master cylinders (62).

12. Heavy duty transport vehicle according to claim 11, **characterized in that** the slave cylinders act pairwise on at least one steering axle of the trailing second vehicle part (14).

13. Heavy duty transport vehicle according to claim 12, **characterized in that** each master cylinder (62) is hydraulically connected with one of the slave cylinders acting upon the steering axle (24) and is hydraulically disconnected from the other master cylinder (62) and the other one of the slave cylinders acting on the steering axle (24).

14. Heavy duty transport vehicle according to one of the claims 12 to 13, **characterized in that** the master cylinders (62) are hydraulically loaded.

## Revendications

1. Dispositif (48) pour la détection d'un angle de braquage entre une première partie de véhicule en avance (16) et une deuxième partie de véhicule en retard (14) d'un véhicule (10), avec deux maîtres-cylindres (62), qui comprennent respectivement un tube cylindrique (64) et une tige de piston (66), avec une came (60), le long de la périphérie de laquelle les extrémités libres des tiges de piston (66) se déplacent en cas de modifications de l'angle de braquage, dans laquelle les tiges de piston (66) sont plus ou moins rentrées ou sorties en fonction de l'angle de braquage, **caractérisée en ce que** les extrémités libres des tiges de piston (66) des deux maîtres-cylindres (62) sont reliées l'une à l'autre par au moins un étrier (80, 82).

2. Dispositif selon la revendication 1, **caractérisée en ce que** les extrémités libres des tiges de piston (66) sont reliées par deux étriers (80, 82), desquels respectivement un est placé au-dessus ou en dessous de la came (60).

3. Dispositif (48) selon l'une quelconque des revendications 1 ou 2, **caractérisée en ce que** les extrémités libres des tiges de piston (66) sont dotées d'au moins un rouleau (76), qui roule sur la périphérie de la came (60) en cas de modifications de l'angle de braquage.

4. Dispositif (48) selon la revendication 3, **caractérisée en ce que** les maîtres-cylindres (62) pressent les rouleaux (76) contre la périphérie de la came (60).

5. Dispositif selon l'une quelconque des revendications précédentes, **caractérisée en ce que** la came (60) entoure une articulation à rotule (38), via laquelle une parmi la première partie de véhicule en avance (16) et la deuxième partie de véhicule en retard (14) s'appuie sur l'autre partie de véhicule respective (16 ; 14).

6. Dispositif selon l'une quelconque des revendications précédentes, **caractérisée par** deux articulations de pivotement (58) agencées des deux côtés de la came (60), via lesquelles une parmi la première partie de véhicule en avance (16) et la deuxième partie de véhicule en retard (14) s'appuie sur l'autre partie de véhicule respective (16 ; 14).

7. Dispositif selon l'une quelconque des revendications précédentes, **caractérisée en ce que** les deux maîtres-cylindres (62) sont agencés sur des côtés opposés de la came (60) et présentent des axes médians longitudinaux alignés.

8. Dispositif selon l'une quelconque des revendications précédentes, **caractérisée en ce qu'**à chaque modification de l'angle de braquage, la tige de piston (66) d'un des deux maîtres-cylindres (62) est rentrée d'une valeur définie et la tige de piston (66) de l'autre des deux maîtres-cylindres (62) est sortie de la même valeur.

9. Dispositif selon l'une quelconque des revendications 1 à 8, **caractérisée en ce que** les deux maîtres-cylindres (62) sont reliés solidement à la partie de véhicule en avance (16) et **en ce que** la came (60) tourne conjointement avec la partie de véhicule en retard (14) par rapport à la partie de véhicule en avance (16).

10. Dispositif selon l'une quelconque des revendications 1 à 8, **caractérisée en ce que** les deux maîtres-cylindres sont reliés solidement à la partie de véhicule en retard et **en ce que** la came tourne conjointement avec la partie de véhicule en avance par rapport à la partie de véhicule en retard.

11. Véhicule de transport de charges lourdes (10) avec une première partie de véhicule en avance (16), une deuxième partie de véhicule en retard (14) et un dispositif de braquage pour le braquage de la deuxième partie de véhicule en retard (14) en fonction de modifications d'un angle de braquage de la première partie de véhicule en avance (16) par rapport à la deuxième partie de véhicule en retard (14), **caractérisé par** un dispositif (48) selon l'une quelconque des revendications précédentes et par au moins deux cylindres récepteurs, qui sont reliés respectivement de manière hydraulique à un maître-cylindre (62) et braquent la deuxième partie de véhicule en retard (14) en fonction des modifications de l'angle de braquage détectées par les maîtres-cylindres (62).

12. Véhicule de transport de charges lourdes selon la revendication 11, **caractérisé en ce que** les cylindres récepteurs agissent par paire sur au moins un essieu de braquage (24) de la deuxième partie de véhicule en retard (14).

13. Véhicule de transport de charges lourdes selon la revendication 12, **caractérisé en ce que** chaque maître-cylindre (62) est relié de manière hydraulique à un des cylindres récepteurs agissant sur un essieu de braquage (24) et est séparé de manière hydraulique de l'autre maître-cylindre (62) et de l'autre des cylindres récepteurs agissant sur un essieu de braquage (24).

14. Véhicule de transport de charges lourdes selon l'une quelconque des revendications 12 à 13, **caractérisé en ce que** les maîtres-cylindres (62) sont précontraints de manière hydraulique.
